Europäisches Patentamt

(19) European Patent Office

Office européen des brevets

(11) Veröffentlichungsnummer : **0 071 147**
**B1**

(12) **EUROPÄISCHE PATENTSCHRIFT**

(45) Veröffentlichungstag der Patentschrift :
03.04.85

(51) Int. Cl.⁴ : **G 01 N 27/83**, **G 01 N 29/04**

(21) Anmeldenummer : **82106490.4**

(22) Anmeldetag : **19.07.82**

(54) **Zerstörungsfreie Prüfung von ferromagnetischen Materialien.**

(30) Priorität : 21.07.81 DE 3128825

(43) Veröffentlichungstag der Anmeldung :
09.02.83 Patentblatt 83/06

(45) Bekanntmachung des Hinweises auf die Patenterteilung : 03.04.85 Patentblatt 85/14

(84) Benannte Vertragsstaaten :
**FR GB IT SE**

(56) Entgegenhaltungen :
DE-A- 2 652 085
DE-A- 3 012 187
DE-B- 1 938 107
DE-B- 2 211 133
DE-C- 2 621 684
MATERIALPRÜFUNG, Band 13, Nr. 12 Dezember 1971, Düsseldorf W. STUMM "Magnetische Querfehlerprüfung mit oszillierenden Punktsonden" Seiten 401 bis 432
"SAM Inspection Systems of Oil Country Tubular Goods" National Fall Conference of the American Society Nondestructive Testing, oct. 13-16, 1975 Atlanta

(73) Patentinhaber : **Nukem GmbH**
**Rodenbacher Chaussee 6 Postfach 11 00 80**
**D-6450 Hanau 11 (DE)**

(72) Erfinder : **Abend, Klaus, Dr.**
**Am Kirschenberg 1**
**D-6470 Büdingen (DE)**
Erfinder : **Hüschelrath, Gerhard, Dr.**
**Am Klingergraben 7**
**D-8752 Laufach-Frohnhofen (DE)**
Erfinder : **Ruth-Orthen, Ursula**
**Gartenstrasse 13**
**D-6451 Ronnenburg 1 (DE)**

(74) Vertreter : **Stoffregen, Hans-Herbert, Dr. Dipl.-Phys. et al**
**Patentanwälte Strasse & Stoffregen Salzstrasse 11a**
**D-6450 Hanau/Main (DE)**

EP 0 071 147 B1

**Beschreibung**

Die Erfindung bezieht sich auf ein Verfahren zur zerstörungsfreien Prüfung von ferromagnetischen Materialien, vorzugsweise von zylindrischen Prüflingen wie Rohren oder Stangen, bei dem der Prüfling von einem rotierenden zwei Polschuhe auweisenden Magneten umgeben wird und das von den Magneten erzeugte Magnetfeld zur Streuflußmessung benutzt wird, und auf eine Vorrichtung gemäß dem Oberbegriff des Anspruchs 2.

Eine zerstörungsfreie Werkstoffprüfung kann mittels Ultraschall erfolgen, bei der piezoelektrische Schwinger eingesetzt werden, von denen Ultraschallwellen ausgehen und mittels eines Ankopplungsmediums wie zum Beispiel Wasser in das Werkstück eingeleitet werden. Daneben gibt es eine elektrodynamische Erzeugung von Ultraschall in elektrisch leitfähigen ferromagnetischen Werkstücken. Dabei werden Ultraschallwellen erzeugt, indem mittels einer Spule im Werkstück hochfrequente Impulswirbelströme erregt werden. Ein gleichzeitig in diesem Bereich wirksames Magnetfeld führt zusammen mit den Wirbelströmen zur Entstehen von Lorentzkräften, die auf den Gitterverband des Werkstücks wirken und die Schallwellen hervorrufen. Dieses die Erzeugung verdeutlichende Prinzip ist für den Empfang umkehrbar. Die Prüfung von Werkstücken aus ferromagnetischen Materialien in Form von zum Beispiel Rohren oder Stangen kann auch in Streufluß-Rotationsanlagen erfolgen, bei denen in dem Prüfling ein magnetischer Fluß erzeugt wird, wobei Fehlstellen im Prüfling zu Streufeldern führen können, die mit Magnetfeldsonden detektiert werden. Zum Stand der Technik vgl. DE-A1-25 59 125, DE-C3-26 21 684, The Sumitomo Search Nr. 17, Mai 1977, Seite 73 bis 79.

Um in zylinderförmig ausgebildeten Prüflingen Längsfehler oder Löcher zu orten, werden Streuflußmessungen durchgeführt. Dieses Verfahren ermöglicht jedoch kaum oder überhaupt nicht, Querfehler und Meßdaten über die Rohr- bzw. Stangendimensionen wie zum Beispiel Wanddicke zur Verfügung zu stellen. Zur Ermittlung dieser Werte greift man daher üblicherweise auf Ultraschall-Rotationsanlagen zurück, die nicht nur wesentlich teurer sind, sondern auch aufgrund der erforderlichen Ultraschallkopplung über zum Beispiel eine Wasserstrecke konstruktiv recht aufwendig sind.

In der DE-B2-19 38 107 wird ein Streuflußprüfverfahren zum Auffinden von Oberflächenrissen in einem Werkstück beschrieben. Um die Messempfindlichkeit zu erhöhen, wird in dem Werkstück durch magnetostriktive Anregung Ultraschall erzeugt, der eine magnetische Leitwertänderung des Materials bewirkt. Dadurch erfährt das an einem Riß austretende Streuflußfeld eine Feldgrößenveränderung, die als hochfrequenter Wechselfeldanteil in Erscheinung tritt, der wiederum induktiv erfaßt wird.

Aufgabe der vorliegenden Erfindung ist es, ein Verfahren und eine Vorrichtung der eingangs genannten Art zur Verfügung zu stellen, bei denen gleichzeitig Längsfehler, Löcher, Querfehler und Dimensionsbestimmungen unter Ausnutzung des den Prüfling rotierend umgebenden Magneten ermöglicht wird, dessen Magnetfeld bereits zur Streuflußmessung benutzt wird.

Die Aufgabe wird dadurch gelöst, daß das Magnetfeld gleichzeitig zur elektrodynamischen Anregung eines Ultraschallfelds im Prüfling benutzt wird und das Ultraschallfeld ausgemessen wird. Demzufolge zeichnet sich das erfindungsgemäße Verfahren durch ein Kombination an und für sich bekannter Prüfverfahren aus, die jeweils für sich optimal zur Bestimmung von Längsfehlern und Löchern bzw. von Querfeldern und Dimensionsmessungen eingesetzt werden können. Dabei ist insbesondere hervorzuheben, daß man bei der Überprüfung Koppelmedien nicht benötigt, so daß die kostengünstigen Eigenschaften der Streufluß-Rotationsanlagen beibehalten werden.

Das erfindungsgemäße Verfahren, also die Kombination Streuflußmessung und elektrodynamisches Anregungsverfahren, kann durch eine Vorrichtung durchgeführt werden, welche sich dadurch auszeichnet, daß in den dem Prüfling zugewandten Bereichen der Polschuhe erste Wirbelstromerreger- und Ultraschallempfangssonden und/oder in dem dem Prüfling zugewandten Bereich der Magnetfeldsonde zweite Wirbelstromerreger- und Ultraschallempfangssonden angeordnet sind. Mit anderen Worten werden an und für sich bekannte Vorrichtungsmerkmale in den erfindungsgemäßen Vorschlag integriert, die sich auf Streufluß-Rotationsprüfanlagen beziehen. Diese bestehen im wesentlichen aus rotierenden Polschuhen eines Magneten, der in dem Prüfling einen magnetischen Fluß erzeugt. Steigert man die Feldstärke auf einen Wert, bei dem das Prüflingsmaterial in die magnetische Sättigung gelangt, so führen Fehlstellen wie zum Beispiel Risse oder Querschnittsverringerungen zu relativ starken Streufeldern, die mit Magnetfeldsonden ermittelt werden können, die synchron mit dem Magneten um den Prüfling rotieren. Vorzugsweise sind zwei Magnetfeldsondengruppen vorgesehen, die um 9 Grad versetzt zu den Polschuhen synchron um den Prüfling rotieren. Durch eine entsprechende Streuflußmessung unter Ausnutzung der beschriebenen Anordnung von Polschuhen und Magnetfeldsonden lassen sich Außenfehler bis zu 5 % der Wanddicke und Innenfehler bis zu 10 % der Wanddicke einwandfrei ermitteln.

Um Dimensionsmessungen und die Ortung von Querfehlern zu ermöglichen, erfolgt nach der erfindungsgemäßen Lehre eine elektrodynamische Anregung von Ultraschallsignalen. Das dazu erforderliche Magnetfeld wird von den rotierenden zwei Polschuhe aufweisenden Magnetjoch erzeugt, so daß insoweit die bereits im Zusammenhang mit der Streuflußmessung erforderlichen Elemente Verwendung finden. Dabei benutzt man insbesondere die von dem rotierenden Magneten auftretenden vertikal und parallel zur Prüflingsoberfläche auftretenden Magnetfelder. Letztere treten im Bereich der um 90 Grad zu dem Polschuhen versetzt angeordneten Magnetfeldsonden, wohingegen erstere im Bereich der Polschuhe auftreten. Die zusammen mit dem magnetischen Feld und den Wirbelstromimpulsen erzeugten Ultraschallwellen können in Abhängigkeit von der Anordnung der Wirbelstromerreger- und Empfangssonden Transversal- oder Oberflächenwellen sein. Die Transversalwellen werden dann zur Bestimmung von Dimensionsgrößen also zum Beispiel der Wanddicke und die Oberflächenwellen zur Detektion von Querfehlern herangezogen.

Bei einer besonders hervorzuhebenden Ausgestaltung der Erfindung werden zur Erzeugung von Transversalwellen die Wirbelstromerreger- und Empfangssonden in den freien dem Prüfling zugewandten Enden der Polschuhe angeordnet, wobei in weiterer Ausgestaltung mehrere Erreger- und Empfangssonden nebeneinander angeordnet sind, um gleichzeitig mehrere Spuren abtasten zu können.

Eine optimale Anregung von Oberflächenwellen finden — wie erwähnt — im Bereich der Magnetfeldsonden, die in Bezug auf die Polschuhe um 90 Grad versetzt angeordnet sind, statt, so daß in weiterer Ausgestaltung auf den Magnetfeldsonden gleichzeitig die Wirbelstromerreger- und Empfangssonden angeordnet werden. Diese sind nach einer bevorzugten Ausführungsform der Erfindung als Flachspulen ausgebildet, deren Wicklungen mäanderförmig verlaufen. Dabei können zur optimalen Ausnutzung der übermittelten Meßwerte die Hauptachsen der mäanderförmig verlaufenden Wicklung parallel oder nahezu parallel zueinander verlaufen oder auch einen rechten oder nahezu rechten Winkel zueinander beschreiben.

Es sei noch einmal hervorgehoben, daß ein Hauptvorteil der erfindungsgemäßen Lehre darin zu sehen ist, daß durch eine Kombination des an und für sich bekannten Streuflußverfahrens und der auch an und für sich bekannten elektrodynamischen Anregung von Ultraschall ohne die Verwendung eines Koppelmediums sowohl Wanddicken gemessen werden, Querfehler-, Längsfehler oder Löcherortungen vorgenommen werden können, wobei zur Erzeugung der erforderlichen Magnetfelder das von dem rotierenden Magneten ausgenutzt wird.

Die Erfindung wird in der nachfolgenden Beschreibung der Zeichnung näher erläutert.

Es zeigen :

Figur 1 eine Schnittdarstellung einer erfindungsgemäßen Rotationsprüfanlage,

Figur 2 eine Anordnung von Wirbelstromerreger- und Empfangssonden und

Figur 3 und Figur 4 beispielhafte Anordnungen von Magnetfeldsonden und Wirbelstromerreger- und Empfangssonden die auf einem gemeinsamen Träger angeordnet sind.

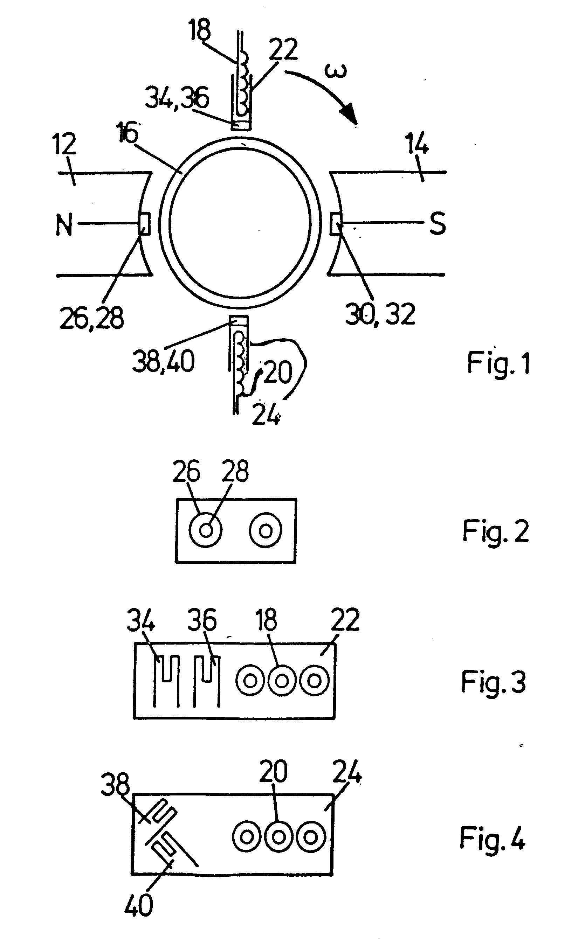

In Fig. 1 ist rein schematisch ein Ausschnitt einer Rotationsprüfanlage dargestellt, in der wesentliche Elemente von an und für sich bekannten Streufluß-Rotationsprüfanlagen Berücksichtigung finden, wie sie auch in der Literatur beschrieben sind, wie zum Beispiel ASME, September 18 bis 23, 1977, Houston, Texas, Nondestructive Inspection of Oil Country Tubular Goods, Seite 1 bis 13 ; The Sumitomo Search Nr. 17, Mai 1977, Seite 73 bis 79 ; Materials Evaluation, Juli 1977, Seiten 52 bis 56.

Solche Streuflußrotationsanlagen bestehen im wesentlichen aus einen zwei Polschuhe 12 und 14 aufweisenden Magneten, der konzentrisch ein zu überprüfendes Werkstück, im Ausführungsbeispiel ein Rohr 16 rotierend umgibt. Dabei wird aufgrund des zwischen den Polschuhen 12 und 14 sich ausbildenden Magnetfeldes in dem Prüfling 16 ein magnetischer Fluß erzeugt. Wird die Feldstärke des Magneten auf einen Wert erhöht, der zu einer magnetischen Sättigung im Material des Prüflings 16 führt, so treten bei Querschnittverringerungen, die aufgrund von Fehlern, wie zum Beispiel von Längsrissen oder Löchern verursacht werden, relativ starke Streufelder über diesen Störstellen auf. Diese Streufelder werden dann mittels Magnetfeldsonden 18 und 20 detektiert, die um 90 Grad versetzt zu den Polschuhen 12 und 14 synchron um den Prüfling 16 mit der Frequenz w rotieren. Dabei werden die Magnetfeldsonden 18 und 20 jeweils von einem Träger 22 bzw. 24 aufgenommen. Mit Holfe solcher Streuflußmessungen lassen sich Außenfehler bis zu 5 % der Wanddicke Innenfehler bis zu 10 % der Wanddicke zweifelsfrei ermitteln.

Mit Hilfe der zuvor beschriebenen Streuflußmessungen können jedoch nicht Querfehler und Meßdaten von zum Beispiel Rohr- bzw. Stangendimensionen wie zum Beispiel Wanddicken von Rohren ermittelt werden. Diese werden nach dem erfindungsgemäßen Vorschlag jedoch in der selben Rotationsanlage mit Hilfe des an und für sich bekannten elektrodynamischen Anregungsverfahrens für Ultraschall ermittelt. Dazu ist es erforderlich, daß ein magnetisches Feld parallel oder vertikal zur Prüflingsoberfläche zusammen mit einem in der Prüflingsoberfläche erzeugten Wirbelstromimpuls auftritt, um verschiedene Kraftimpulse aufgrund der auftretenten Lorentzkräfte an der Prüflingsoberfläche zu erzeugen, die zu Ultraschallwellen führen. In Abhängigkeit von der magnetischen Feldrichtung können Transversal-, Longitudinal- oder Oberflächenwellen als Ultraschall erzeugt werden. Zur Messung der Wanddicke werden dabei im allgemeinen Transversalwallen herangezogen, wohingegen die Detektion von Querfehlern mittels Oberflächenwellen erfolgt.

Der die Polschuhe 12 und 14 aufweisende rotierende Elektro- oder Permanentmagnet erzeugt nun ein magnetisches Feld, welches unterhalb der Polschuhe vertikal zu Prüflingsoberfläche und um 90 Grad versetzt, also im Bereich der Magnetfeldsonden 18 und 20 parallel zur Oberfläche verläuft. Dies bedeutet, daß man gleichzeitig zur Streuflußmessung auch eine elektrodynamische Anregung von Ultraschallsignalwellen mit Hilfe des rotierenden Magneten durchführen kann.

Um die Messung der Wanddicke des Prüflings 16 vornehmen zu können, werden Wirbelstromerreger- und Empfangssonden in den dem Prüfling 16 zugewandten freien Enden der Polschuhe 12 und 14 eingebracht. In der Fig. 1 sind diese Sonden schematisch dargestellt und weisen die Bezugszeichen 26, 28 bzw. 30, 32 auf. Demzufolge werden die von der Sonde 26 bzw. 30 erzeugten Wirbelstromimpulse durch die im selben Polschuh 12 bzw. 14 angeordneten Wirbelstromempfangssonden 28. bzw. 32 erfaßt, um über nicht dargestellte aber an und für sich bekannte elektronische Einrichtungen ausgewertet zu werden. In diesem Zusammenhang sei zum Beispiel auf Literaturstellen « Ultraschallprüfung von Halbzeug unter Verwendung elektrodynamischer Wandler », Hoesch Hüttenwerke AG, Dortmund, 25. Januar 1980, oder die DE-C3-26 21 684 und DE-A1-29 24 819 verwiesen.

Durch die Anordnung der Wirbelstromerreger- und Empfangssonden 26, 28 bzw. 30, 32 in den Bereichen der Polschuhe 12 und 14 lassen sich Wanddicken auf ± 5/100 mm genau bestimmen.

Die optimale Anregung von Oberflächenwellen finden im Bereich der Magnetfeldsonden 18 und 20 statt, so daß demzufolge an gleicher Stelle auch Wirbelstromerreger- und Empfangssonden 34, 36 bzw. 38, 40 angeordnet sind. Diese Sonden werden vorzugsweise von den Halterungen 22 bzw. 24 aufgenommen, die als Träger für die Magnetfeldsonden 18 und 20 dienen. Um eine optimale Meßdatenermittlung zu ermöglichen, sollten die Wirbelstromerreger- und Empfangssonden 34, 36 bzw. 38, 40 als Flachspulen ausgebildet sein, wobei deren Wicklung eine Mäanderform aufweisen, wie sie im Zusammenhang mit den Fig. 3 und 4 dargestellt sind. Durch die im Oberflächenbereich verlaufende Welle werden vorzugsweise immer dann Anteile zum Empfänger reflektiert, wenn diese quer zur Ausbreitungsrichtung und im Oberflächenbereich liegen. Dabei lassen sich verschiedene Sensoranordnungen realisieren. Nach Fig. 3 verlaufen die Hauptachsen der mäanderförmig ausgebildeten Spulen 34 und 36 parallel zu einander und sind neben der Magnetfeldsonde 18 angeordnet. Nach Fig. 3 sind gleichzeitig mehrere Magnetfeldsonden nebeneinander angeordnet, um einen größeren Oberflächenbereich des Prüflings 16 gleichzeitig abtasten zu können. Sowohl die Magnetfeldsonde 18 als auch die mäanderförmigen Spulen 34 und 36 sind erkennbar von dem selben Träger 22 aufgenommen.

Nach Fig. 4 ist in Draufsicht die Halterung 24 dargestellt, bei der mehrere Magnetfeldsonden 20 nebeneinander vorgesehen sind. Die Wirbelstromerreger- bzw. Empfanssonde 38 bzw. 40 weist auch eine Mäanderform auf, wobei deren Achsen einen Winkel von vorzugsweise 90 Grad zueinander einschließen.

Durch die spezielle Anordnung der Wirbelstromerreger- bzw. Empfangssonden 34, 36 oder 38, 40 lassen sich oberflächennahe Fehler ermitteln, deren Erstreckung kleiner als 10 % der jeweiligen Wanddicke sind. Bei der Ermittlung von Quernuten hat sich sogar herausgestellt, daß Störstellen von 7 % der Wanddicke noch klar ermittelt werden können.

Um auch hinsichtlich der in den Polschuhen 12 und 14 angeordneten Wirbelstromerreger- und Empfangssonden 26, 28 bzw. 30 und 32 bei einer Rotation einen größeren Oberflächenbereich des Prüflings 16 erfassen zu können, können selbstverständlich — wie die Fig. 2 verdeutlicht — mehrere Sonden nebeneinander angeordnet sein.

## Ansprüche

1. Verfahren zur zerstörungsfreien Prüfung von ferromagnetischen Materialien, vorzugsweise von zylindrischen Prüflingen wie Rohren oder Stangen, bei dem der Prüfling von einem rotierenden, zwei Polschuhe aufweisenden Magneten umgeben wird und das von den Magneten erzeugte Magnetfeld zur Streuflußmessung benutzt wird, dadurch gekennzeichnet, daß das Magnetfeld gleichzeitig zur elektrodynamischen Anregung eines Ultraschallfelds im Prüfling benutzt wird und das Ultraschallfeld ausgemessen wird.

2. Vorrichtung zur zerstörungsfreien Prüfung von ferromagnetischen Materialien, vorzugsweise von zylindrischen Prüflingen wie Rohren oder Stangen, zur Durchführung des Verfahrens nach Anspruch 1, bei der ein Prüfling (16) von einem rotierenden, zwei Polschuhe (12, 14) aufweisenden Magneten umgeben ist und mindestens eine zu dem Magneten synchron rotierende Magnetfeldsonde (18 ; 20) der Umfangsfläche des Prüflings (16) angeordnet ist, dadurch gekennzeichnet, daß in den dem Prüfling zugewandten Bereichen der Polschuhe erste Wirbelstromerreger- und Ultraschallempfangssonden (26, 28 ; 30, 32) und/oder in dem dem Prüfling zugewandten Bereich der Magnetfeldsonde zweite Wirbelstromerreger- und Ultraschallempfangssonden (34, 36 ; 38, 40) angeordnet sind.

3. Vorrichtung nach Anspruch 2, dadurch gekennzeichnet, daß zwei Magnetfeldsonden (18, 20) vorhanden sind, die jeweils um 90 Grad in Bezug auf einen der Polschuhe (12, 14) versetzt angeordnet sind.

4. Vorrichtung nach Anspruch 3, dadurch gekennzeichnet, daß die Magnetfeldsonden (18, 20) von Halterungen (22, 24) aufgenommen sind, auf denen gleichzeitig die zweiten Wirbelstromerreger- und Ultraschallempfangssonden (34, 36 ; 38, 40) aufgebracht sind.

5. Vorrichtung nach Anspruch 4, dadurch gekennzeichnet, daß die zweiten Wirbelstromerreger- und Ultraschallempfangssonden (34, 36 ; 38, 40) Flachspulen mit mäanderförmig verlaufenden Wicklungen sind.

6. Vorrichtung nach Anspruch 5, dadurch gekennzeichnet, daß die Hauptachsen der mäanderförmig verlaufenden Wicklungen der zweiten Wirbelstromerreger- und Ultraschallempfangssonden (34, 36 ; 38, 40) parallel oder nahezu parallel zueinander angeordnet sind.

7. Vorrichtung nach Anspruch 5, dadurch gekennzeichnet, daß die Hauptachsen der mäanderförmigverlaufenden Wicklungen der zweiten Wirbelstromerreger- und Ultraschallempfangssonden (34, 36 ; 38, 40) einen rechten oder nahezu einen rechten Winkel zueinander beschreiben.

8. Vorrichtung nach Anspruch 2, dadurch gekennzeichnet, daß die ersten Wirbelstromerreger- und Ultraschallempfangssonden (26, 28, 30, 32) konzentrisch zueinander angeordnete Spulen sind.

9. Vorrichtung nach Anspruch 8, dadurch gekennzeichnet, daß in jedem Polschuh mehrere erste Wirbelstromerreger- und Ultraschallempfangsspulen (26, 28 ; 30, 32) nebeneinander angeordnet sind.

### Claims

1. Process for the non-destructive testing of ferromagnetic materials, preferably of cylindrical test bodies, such as pipes or bars, in which the test body is surrounded by a rotating magnet provided with two pole shoes and the magnetic field created by the magnets is used to measure the stray flux, characterised in that the magnetic field is simultaneously used for the electrodynamic excitation of an ultrasound field in the test body and the ultrasound field is measured.

2. Apparatus for the non-destructive testing of ferromagnetic materials, preferably of cylindrical test bodies, such as pipes or bars, for carrying out the process according to claim 1, in which a test body (16) is surrounded by a rotating magnet having two pole shoes (12, 14) and at least one magnetic field probe (18 ; 20) rotating synchronously to the magnet is arranged at the peripheral surface of the test body (16), characterised in that first eddy-current exciting- and ultrasound receiving probes (26, 28 ; 30, 32) are arranged in the regions of the pole shoes facing the test body and/or second eddy-current exciting- and ultrasound receiving probes (34, 36 ; 38, 40) are arranged in the region of the magnetic fiel probe facing the test body.

3. Apparatus according to claim 2, characterised in that two magnetic field probes (18, 20) are provided which are each staggered by 90 degrees in relation to one of the pole shoes (12, 14).

4. Apparatus according to claim 3, characterised in that the magnetic field probes (18, 20) are accommodated by supports (22, 24) on which the second eddy-current exciting- and ultrasound receiving probes (34, 36 ; 38, 40) are also located.

5. Apparatus according to claim 4, characterised in that the second eddy-current exciting- and ultrasound receiving probes (34, 36 ; 38, 40) are flat coils with windings running in a meander-like manner.

6. Apparatus according to claim 5, characterised in that the main axes of the meander-like running windings of the second eddy-current exciting- and ultrasound receiving probes (34, 36 ; 38, 40) are arranged parallel or almost parallel to each other.

7. Apparatus according to claim 5, characterised in that the main axes of the meander-like running eddy-current exciting- and ultrasound receiving probes (34, 36 ; 38, 40) form a right angle or an approximate right-angle to each other.

8. Apparatus according to claim 2, characterised in that the first eddy-current exciting- and ultrasound receiving probes (26, 28, 30, 32) are coils arranged concentrically to each other.

9. Apparatus according to claim 8, characterised in that several first eddy-current exciting- and ultrasound receiving coils (26, 28 ; 30, 32) are arranged beside each other in each pole shoe.

### Revendications

1. Procédé pour l'examen destructif de matériaux ferro-magnétiques, de préférence d'éprouvettes cylindriques telles que des tubes ou des barres, dans lequel l'éprouvette est entourée d'un aimant tournant comportant deux pièces polaires et le champ magnétique produit par l'aimant étant utilisé pour mesurer le flux de dispersion, procédé caractérisé en ce que le champ magnétique est utilisé en même temps pour l'excitation électrodynamique d'un champ ultrasonique dans l'éprouvette, ce champ ultrasonique étant mesuré.

2. Dispositif pour l'examen destructif de matériaux ferro-magnétiques, de préférence d'éprouvettes cylindriques telles que des tubes ou des barres, destiné à l'exécution du procédé suivant la revendication 1, dans lequel une éprouvette (16) est entourée par un aimant tournant comportant deux pièces polaires (12, 14) et au moins une sonde (18, 20) à champ magnétique tournant en synchronisme avec l'aimant est disposée sur la surface circonférentielle de l'éprouvette (16), caractérisé en ce qu'il est disposé, dans les zones des pièces polaires tournées vers l'éprouvette, de premières sondes (26, 28, 30, 32) excitatrices de courant de Foucault, et réceptrices des ultra-sons, et/ou, dans la zone de la sonde à champ magnétique tournée vers l'éprouvette, des secondes sondes (34, 36 ; 38, 40) excitatrices de courants de Foucault et réceptrices d'ultra-sons.

3. Dispositif suivant la revendication 2, caractérisée en ce qu'il est prévu deux sondes à champ magnétique (18, 20), qui sont toutes deux décalées de 90° par rapport à une pièce polaire chacune.

4. Dispositif suivant la revendication 3, caractérisé en ce que les sondes à champ magnétique (18, 20) sont reçues par des fixations (22, 24), sur lesquelles sont posés en même temps les secondes sondes (34, 36 ; 38, 40) d'excitatrices de courants de Foucault et réceptrices des ultra-sons.

5. Dispositif suivant la revendication 4, caractérisé en ce que les secondes sondes (34, 36 ; 38, 40) excitatrices de courants de Foucault et réceptrices des ultra-sons sont des bobines plates dont les spires s'étendent en forme de méandres.

6. Dispositif suivant la revendication 5, caractérisé en ce que les axes principaux des bobines, s'étendant en forme de méandres, des secondes sondes (34, 36 ; 38, 40) excitatrices de courants de Foucault et réceptrices d'ultra-sons sont disposées parallèlement ou à peu près parallèlement entre elles.

7. Dispositif suivant la revendication 5, caractérisé en ce que les axes principaux des enroulements s'étendant en forme de méandres, des secondes sondes (34, 36 ; 38, 40) excitatrices de courants de Foucault et réceptrices d'ultra-sons inscrivent entre elles un angle droit ou à peu près droit.

8. Dispositif suivant la revendication 2, caractérisé en ce que les premières sondes (26, 28 ; 30, 32) excitatrices de courants de Foucault et réceptrices d'ultra-sons sont des bobines disposées concentriquement entre elles.

9. Dispositif suivant la revendication 8, caractérisé en ce que, dans chaque pièce polaire, on dispose plusieurs premières bobines (26, 28 ; 30, 32) excitatrices de courants de Foucault et réceptrices d'ultra-sons, à côté les unes des autres.

Fig. 1

Fig. 2

Fig. 3

Fig. 4